# EUROPÄISCHE PATENTANMELDUNG

(11) **EP 2 955 111 A1**
(43) Veröffentlichungstag der Anmeldung: **16.12.2015**
(21) Anmeldenummer: 15171360.9
(22) Anmeldetag: 10.06.2015
(51) Int. Cl.: B64D 13/06

(54) **VORRICHTUNG ZUR VORKÜHLUNG UND REINIGUNG VON TRIEBWERKSZAPFLUFT**

(30) Priorität: 13.06.2014 DE 102014008411
(71) Anmelder: Airbus Defence and Space GmbH, 85521 Ottobrunn (DE)
(72) Erfinder: Oberpriller, Korbinian, 83620 Kleinhöhenrain (DE); Oberpriller, Helmut, 83620 Kleinhöhenrain (DE)
(74) Vertreter: Maiwald Patentanwalts GmbH

(57) **Zusammenfassung**

Eine Kühlvorrichtung (100) zum Kühlen von Zapfluft (106) in einem Luftfahrzeug weist eine Einlassöffnung (110) zum Einlassen von Zapfluft und eine Auslassöffnung (120) zum Auslassen von Zapfluft auf. Weiterhin weist die Kühlvorrichtung einen Wärmetauscher (105) mit einer ersten Oberfläche (111), entlang derer die Zapfluft (106) von der Einlassöffnung zu der Auslassöffnung führbar ist und mit einer zweiten Oberfläche (113), entlang derer ein Kühlmedium (108) führbar ist, auf. Die erste Oberfläche (111) weist ein katalytisches Element auf und ausgeführt ist, einen katalytischen Abbau von Zapfluftverunreinigungen vorzunehmen. Der Wärmetauscher (105) ist ein Rippenplattenwärmetauscher und die erste Oberfläche (111) wird zumindest teilweise von einer ersten Rippe (109B) gebildet.

## Beschreibung

### Gebiet der Erfindung

Die vorliegende Erfindung betrifft eine Kühlvorrichtung zum Kühlen von Zapfluft und ein Luftfahrzeug mit einer solchen Kühlvorrichtung.

### Hintergrund der Erfindung

In Luftfahrzeugen, insbesondere in Luftfahrzeugen zum Transport von Passagieren, wird während des Betriebs eines solchen Luftfahrzeugs Luft aus der Umgebung des Luftfahrzeugs aufgenommen und in den Passagierbereich des Luftfahrzeugs eingebracht. Die Luft kann beispielsweise als sog. Zapfluft einem Triebwerkskompressor entnommen werden. Die aus dem Triebwerkskompressor entnommene Zapfluft kann eine Temperatur zwischen 250 Grad Celsius und mehr, beispielsweise bis zu 600 Grad Celsius oder 650 Grad Celsius, aufweisen. Diese Luft wird anschließend einem Vorkühler (Precooler) zugeführt, um die Temperatur zu senken. Am Ausgang des Vorkühlers kann die Luft beispielsweise auf etwa 200 Grad Celsius abgekühlt sein. Diese Luft durchströmt in Rohrleitungen eine Tragfläche des Luftfahrzeugs und wird nach weiterer Kühlung und Druckentspannung mit der aus der Kabine rezirkulierten Luft gemischt und anschließend in die Passagierkabine geleitet. Optional kann ein Filter bzw. ein Filterelement oder ein Konverter mit der Rohrleitung gekoppelt sein, um die durch die Rohrleitung strömende Zapfluft zu reinigen.

Bei dem Konverter kann es sich insbesondere um einen Ozon/VOC-Konverter handeln. Ein VOC-Konverter (volatile organic compounds) dient dem Abbau flüchtiger organischer Verbindungen.

Ein Ozon/VOC-Konverter, welcher im Rumpf eines Luftfahrzeugs angeordnet ist, also räumlich getrennt von dem Vorkühler, kann gerade im Hinblick auf den Abbau von gas- und partikelförmigen organischen Verunreinigungen keine zufriedenstellende Filterleistung anbieten. Dies kann insbesondere darin begründet sein, dass für den Abbau von gas- und partikelförmigen organischen Verunreinigungen eine vergleichsweise hohe Reaktionstemperatur erforderlich sein kann bzw. eine Abbaurate mit steigender Temperatur der Luft zunimmt.

EP 1 499 422 B1 beschreibt einen Rohrbündelwärmetauscher mit modifizierten Rohren, welcher ein kombiniertes System bestehend aus einem Vorkühler und einem Ozonkonverter darstellt. Nachteilig an dem hier beschriebenen System kann ein hoher Fertigungsaufwand sein, welcher durch die Verwendung einer Vielzahl von Einzelteilen mit hohen Kosten verbunden ist. Durch die Einbauten in den Rohren kann der Druckverlust des Systems ansteigen. Für neue Triebwerksgenerationen und den damit verbundenen höheren Zapflufttemperaturen kann ein Rohrbündelwärmetauscher eine zu geringe Kühlleistung bieten.

### Zusammenfassung

Es kann als Aufgabe der vorliegenden Erfindung gesehen werden, eine Kühlvorrichtung zum Kühlen von Zapfluft in einem Luftfahrzeug anzugeben, welche die Zapfluft mit einem verbesserten Wirkungsgrad von unerwünschten Substanzen befreit.

Diese Aufgabe wird gelöst durch einen Gegenstand gemäß den unabhängigen Ansprüchen. Weiterbildungen der Erfindung ergeben sich aus den abhängigen Ansprüchen und aus der folgenden Beschreibung.

Gemäß einem ersten Aspekt ist eine Kühlvorrichtung zum Kühlen von Zapfluft angegeben. Die Kühlvorrichtung weist eine Einlassöffnung zum Einlassen von Zapfluft und eine Auslassöffnung zum Auslassen von Zapfluft auf. Weiterhin weist die Kühlvorrichtung einen Wärmetauscher mit einer ersten Oberfläche, entlang welcher die Zapfluft von der Einlassöffnung zu der Auslassöffnung führbar ist, und mit einer zweiten Oberfläche, entlang welcher ein Kühlmedium führbar ist, auf. Die erste Oberfläche weist ein katalytisches Element auf und ist ausgeführt, einen katalytischen Abbau von Zapfluftverunreinigungen vorzunehmen. Der Wärmetauscher ist ein Rippenplattenwärmetauscher und die erste Oberfläche wird zumindest teilweise von einer ersten Rippe gebildet.

Als katalytische Materialien werden bevorzugt fein verteilte Partikel der Edelmetalle Platin und Palladium und/oder von Metalloxiden (z.B. Mangandioxid, Kupfer(II)-oxid) auf Beschichtungen mit hoher bzw. großer innerer Oberfläche eingesetzt. Diese Beschichtungen setzen sich meist aus Mischungen von anorganischen Oxiden zusammen und werden als "Washcoat" bezeichnet.

Die Kühlvorrichtung weist einen Wärmetauscher auf, welcher gleichzeitig als katalytisches Element fungiert. In anderen Worten sind also die Kühlfunktion und die Konverterfunktion in einer Vorrichtung räumlich und funktional zusammengefasst. Zum Abbau bestimmter Verunreinigungen aus der Zapfluft kann eine hohe Temperatur erforderlich sein. Indem das katalytische Element räumlich an dem Wärmetauscher der Kühlvorrichtung, insbesondere an dem Vorkühler, angeordnet ist, wird eine hohe Temperatur durch die Triebwerkszapfluft bereitgestellt.

Das katalytische Element kann insbesondere ausgeführt sein, Ozon, flüchtige organische Verbindungen und/oder partikelförmige organische Verunreinigungen aus der Triebwerkszapfluft durch katalytischen Abbau zu entfernen.

Ein Rippenplattenwärmetauscher zeichnet sich im Vergleich zu einem Rohrbündelwärmetauscher durch einen höheren Wirkungsgrad aus, was die Kühlleistung betrifft (also durch eine bessere Kühlleistung), kann jedoch im Vergleich zu einem Rohrbündelwärmetauscher ein höheres Gewicht mit sich bringen. Weiterhin kann ein Rippenplattenwärmetauscher insbesondere bei gleicher Kühlleistung weniger Bauraum erfordern als ein Rohrbündelwärmetauscher. Allgemein zeichnet sich ein Rippenplattenwärmetauscher durch eine einfache Fertigung aus, da die Rippen und die Platten abwechselnd übereinander geschichtet und miteinander mechanisch gekoppelt werden. Diese mechanische Kopplung kann beispielsweise durch Sintern erfolgen.

Rippenplattenwärmetauscher können in beliebigen Formen und Varianten ausgeführt sein. Die Zapfluft und das Kühlmedium durchströmen einen Rippenplattenwärmetauscher so, dass keine Vermischung zwischen Zapfluft und Kühlmedium stattfindet, d.h. dass die Zapfluft und das Kühlmedium räumlich voneinander getrennte Fluidkanäle durchströmen. Zumindest ein Teil oder die vollständige Oberfläche, welche mit der Zapfluft in Berührung kommt oder kommen kann, weist ein katalytisches Element auf. Das Material, aus welchem der Rippenplattenwärmetauscher gefertigt ist, kann katalytisch wirken. Dabei kann die Zusammensetzung des Materials des Rippenplattenwärmetauschers so gewählt sein, dass auf sämtliche bekannte katalytische Elemente oder Stoffzusammensetzungen zurückgegriffen werden kann.

Das Kühlmedium kann jedes geeignete Fluid sein, insbesondere kann hierfür Luft aus der Umgebung der Kühlvorrichtung verwendet werden, bei Verwendung in einem Luftfahrzeug insbesondere Luft aus der das Luftfahrzeug umgebenden Atmosphäre. Gemäß einer Ausführungsform weist die erste Oberfläche eine katalytische Beschichtung auf, welche die erste Oberfläche zumindest teilweise oder abschnittsweise beschichtet oder bedeckt.

Für die katalytische Beschichtung, insbesondere die Funktion der katalytischen Beschichtung, gilt sinngemäß das Gleiche, was bereits betreffend das katalytische Element ausgeführt wurde.

Gemäß einer weiteren Ausführungsform ist die erste Oberfläche vollständig katalytisch beschichtet.

Je größer die beschichtete Fläche der ersten Oberfläche ist, desto besser kann eine Filterleistung sein bzw. desto länger kann eine geforderte Filterleistung erbracht werden. Mit zunehmender Dauer, in der eine gewünschte Filterleistung gebracht wird, erhöht sich also die Lebensdauer und mögliche Einsatzdauer einer Kühlvorrichtung.

Gemäß einer weiteren Ausführungsform erstreckt sich die erste Oberfläche zumindest teilweise in einen ungekühlten Abschnitt der Kühlvorrichtung.

In dem ungekühlten Abschnitt der Kühlvorrichtung liegt eine höhere Temperatur vor, als in einem gekühlten Abschnitt, so dass hierdurch die Abbaurate durch das katalytische Element durch die höhere Temperatur zusätzlich gesteigert werden kann.

Gemäß einer weiteren Ausführungsform ist der ungekühlte Abschnitt der Kühlvorrichtung so angeordnet, dass sich der ungekühlte Abschnitt in einer Fließrichtung der Zapfluft an die Einlassöffnung der Kühlvorrichtung anschließt.

Ausgehend von einer Zapfstelle der Zapfluft in einem Triebwerkskompressor tritt die ungekühlte gezapfte Luft durch die Einlassöffnung in die Kühlvorrichtung und weist an dieser Stelle ihre höchste Temperatur auf. Damit trifft die Zapfluft an der Stelle ihrer höchsten Temperatur in der Kühlvorrichtung auf die erste Oberfläche, welche in diesem Bereich eine hohe oder maximale Abbaurate ermöglicht.

Gemäß einer weiteren Ausführungsform ist ein gekühlter Abschnitt der Kühlvorrichtung zwischen dem ungekühlten Abschnitt und der Auslassöffnung der Kühlvorrichtung angeordnet.

Diese Kombination von ungekühltem Abschnitt und gekühltem Abschnitt ermöglicht einerseits eine möglichst hohe Abbaurate von Verunreinigungen aus der Zapfluft und zum anderen eine Kühlung der Zapfluft.

Gemäß einem weiteren Aspekt ist ein Luftfahrzeug mit einer Kühlvorrichtung wie oben und im Folgenden beschrieben angegeben. Die Einlassöffnung der Kühlvorrichtung ist mit einer Zapfstelle gekoppelt, um Zapfluft aufzunehmen.

Damit wird die Zapfluft von der Zapfstelle der Kühlvorrichtung zugeführt, welche beide Funktionen des Kühlens und des Abbaus unerwünschter Substanzen aus der Zapfluft erfüllt.

Gemäß einer Ausführungsform ist die Zapfstelle ein Kompressor, welcher an einem Triebwerk des Luftfahrzeugs angeordnet ist.

Die Einlassöffnung der Kühlvorrichtung ist über eine Fluidverbindung unmittelbar mit der Zapfstelle gekoppelt. Zwischen dem Triebwerkskompressor und dem Vorkühler können Druckregulierventile angeordnet sein, die unter anderem den Druck von ca. 10 bar im Triebwerkskompressor auf ca. 3 bar (absolut) reduzieren.

Üblicherweise ist der Triebwerkskompressor Teil des Triebwerks und dient hauptsächlich der Verdichtung der Luft, bevor der Treibstoff in der Brennkammer eingespritzt wird. Ein kleiner Teil der verdichteten Luft (einige Prozent) wird aus dem Kompressor (Verdichter) abgezapft (aus einer Mitteldruck- oder Hochdruckstufe des Triebwerkkompressors) und dient der Kabinenluftversorgung. Der Kompressor befindet sich üblicherweise im Triebwerk.

Gemäß einer weiteren Ausführungsform ist die Kühlvorrichtung zwischen einem Triebwerk und einer Tragfläche des Luftfahrzeugs angeordnet.

Die Kühlvorrichtung wie oben und im Folgenden beschrieben kombiniert das Kühlen von Zapfluft und den Abbau von unerwünschten Substanzen aus der Zapfluft in einer Vorrichtung und kann damit die Qualität der in einem Passagierraum eines Luftfahrzeugs bereitgestellten Luft erhöhen. Es kann insbesondere nicht mehr erforderlich sein, einen Filter in Form eines Ozon/VOC-Konverters im Flugzeugrumpf optional bereitstellen zu müssen.

Der Rippenplattenwärmetauscher kann in beliebigen geometrischen Formen ausgeführt sein, wie z. B. eckig, rund, oval und beispielsweise als Wabenkonstruktion oder Lamellenwärmetauscher ausgeführt sein. Die komplette Oberfläche oder Teile bzw. Abschnitte der Oberfläche, die von der Zapfluft durchströmt wird bzw. mit der Zapfluft in Berührung kommt, weist katalytisches Material auf oder ist katalytisch beschichtet. Im Falle der Beschichtung können die Rippen und Platten des Wärmetauschers unterschiedlich oder gleich beschichtet sein, die Beschichtung kann sich mit der Laufrichtung, d. h. in Fließrichtung der Zapfluft durch den Wärmetauscher, verändern und in unterschiedlichen Zonen des Wärmetauschers unterschiedliche Zusammensetzungen haben. Der Rippenplattenwärmetauscher kann aus sämtlichen hierfür geeigneten Materialien hergestellt sein, wie z. B. Aluminium, Stahl, Titan oder Legierungen hiervon, und ist nicht an ein bestimmtes Herstellungsverfahren gebunden. Der Wärmetauscher kann sowohl als Kreuzstromwärmetauscher, als Gegenstromwärmetauscher oder als Gleichstromwärmetauscher ausgeführt sein. Eine Wärmeübertragung von Gas zu Gas oder auch von Gas zu einer Flüssigkeit ist möglich. Dies bedeutet, dass die Zapfluft und das Kühlmedium ein Fluid sind. Die Rippen können jede geeignete geometrische Form haben und die Anordnung, Position, Form und Anzahl der Rippen kann variieren. Auch kann die Dicke der Rippen unterschiedlich ausfallen. Die Rippen können Ausnehmungen in Form von Durchbrüchen oder Löchern oder Vertiefungen aufweisen. Die Ausnehmungen können insbesondere ausgelegt sein, Turbulenzen in der strömenden Zapfluft hervorzurufen, so dass die Zapfluft in Kontakt mit der ersten Oberfläche gelangt. Ebenso wie die Rippen können auch die Platten jede mögliche und geeignete geometrische Form aufweisen. Die Anzahl der Platten und der Abstand benachbarter Platten zueinander können variieren. Die Einlassöffnung für die Zapfluft und eine Einlassöffnung für das Kühlmedium können jeweils frei in Form und Funktion gestaltet sein (mit/ohne Verwirbelungselement, Düse/Diffusor, Einlaufverteilung).

Bei zukünftigen Flugzeuggenerationen werden aller Voraussicht nach vermehrt Ozon/VOC-Konverter zur Serienausstattung gehören. Die Kombinationslösung, wie hier beschrieben, kann eine deutliche Gewichtseinsparung bringen und auch den Strömungswiderstand reduzieren, indem nur eine einzelne Vorrichtung (die Kühlvorrichtung) bereitgestellt wird, welche durch die katalytische Beschichtung nur unwesentlich schwerer wird, nicht aber zwei räumlich voneinander getrennte Vorrichtungen, nämlich einen Ozon/VOC-Konverter und einen Vorkühler.

### Kurze Beschreibung der Zeichnungen

Nachfolgend wird anhand der beigefügten Zeichnungen näher auf Ausführungsbeispiele der Erfindung eingegangen. Es zeigen:
Fig. 1 eine schematische Darstellung einer Kühlvorrichtung in einem montierten Zustand an einem Luftfahrzeug gemäß einem Ausführungsbeispiel.
Fig. 2 eine schematische Darstellung einer Kühlvorrichtung gemäß einem weiteren Ausführungsbeispiel.
Fig. 3 eine schematische Darstellung eines Rippenplattenwärmetauschers für eine Kühlvorrichtung gemäß einem weiteren Ausführungsbeispiel.

### Detaillierte Beschreibung von Ausführungsbeispielen

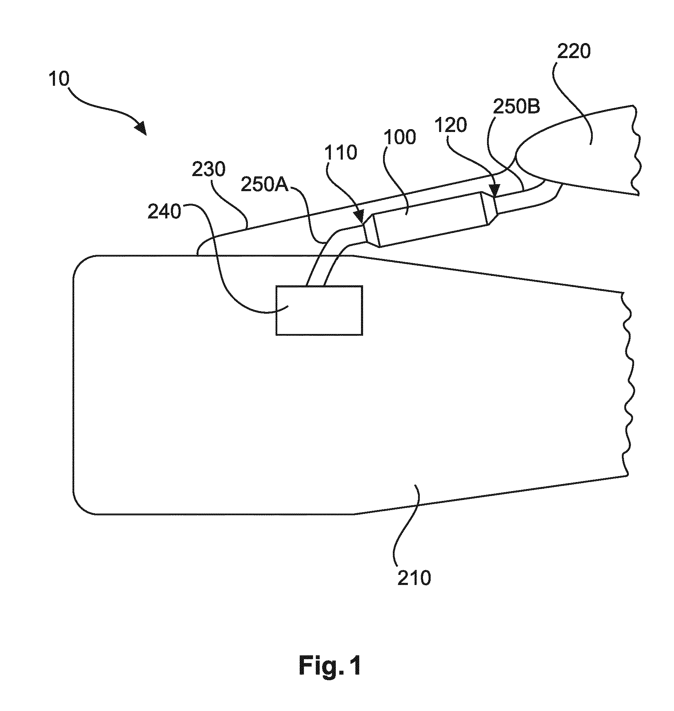

Fig. 1 zeigt eine schematische Teil-Darstellung eines Luftfahrzeugs 10. Das Luftfahrzeug weist ein Triebwerk 210 und eine Tragfläche 220 auf, wobei das Triebwerk 210 über ein Kopplungselement 230 mit der Tragfläche 220 mechanisch gekoppelt ist. An bzw. in dem Triebwerk 210 ist eine Zapfstelle 240 angeordnet. Die Zapfstelle kann insbesondere ein Kompressor sein, welcher auch Luft für das Triebwerk bereitstellt.

Die Kühlvorrichtung 100 ist zwischen dem Triebwerk 210 und der Tragfläche 220 angeordnet. Dabei ist eine Einlassöffnung 110 der Kühlvorrichtung über ein Gasleitelement 250A in Form eines Rohres mit der Zapfstelle 240 so gekoppelt, dass ein Fluss der Zapfluft ausgehend von der Zapfstelle 240 zu der Kühlvorrichtung 100 erfolgen kann. Eine Auslassöffnung 120 der Kühlvorrichtung 100 ist über ein zweites Gasleitelement 250B in Form eines Rohres mit einem nicht dargestellten Rohrverbund in der Tragfläche 220 gekoppelt, so dass die Zapfluft ausgehend von der Auslassöffnung 120 in einen Passagierbereich des Luftfahrzeugs 10 geführt werden kann.

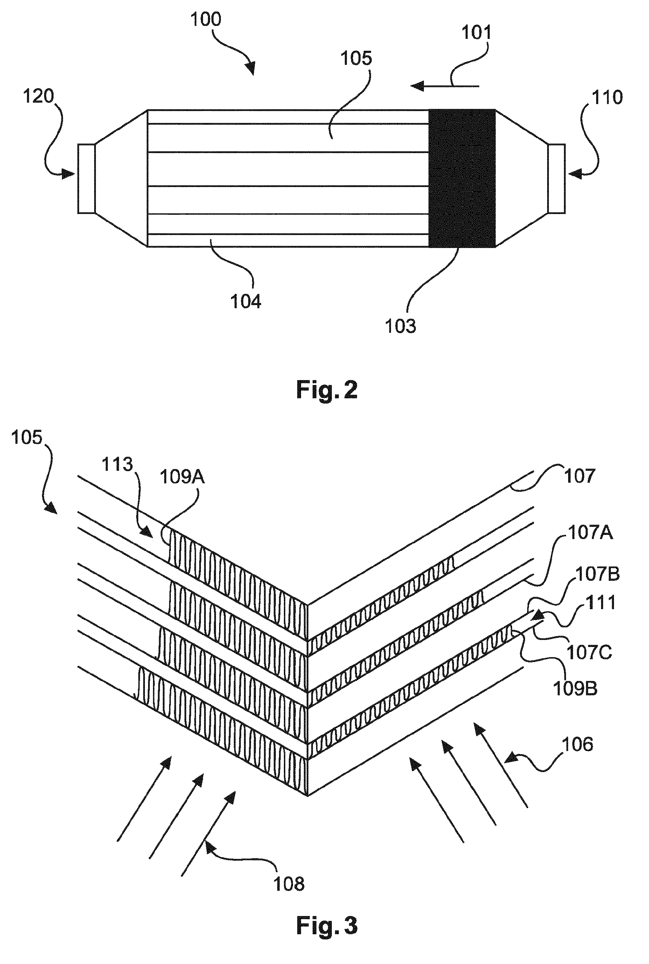

Fig. 2 zeigt eine schematische Darstellung einer Kühlvorrichtung 100. Die Zapfluft fließt von der Einlassöffnung 110 durch den Wärmetauscher 105 in Form eines Rippenplattenwärmetauschers zu der Auslassöffnung 120 in Richtung des Pfeils 101, welcher die Fließrichtung der Zapfluft darstellt.

In diesem Ausführungsbeispiel durchfließt die Zapfluft zunächst einen ersten ungekühlten Abschnitt 103 der Kühlvorrichtung 100, bevor ein zweiter gekühlter Abschnitt 104 der Kühlvorrichtung 100 von der Zapfluft durchflossen wird. In dem ungekühlten Bereich 103, welcher als erster Längsabschnitt bezeichnet werden kann, erfolgt keine aktive Kühlung der Zapfluft, um dadurch in diesem Längsabschnitt 103 eine hohe Abbaurate unerwünschter Substanzen, die in der Zapfluft enthalten sind, zu erzielen.

Der ungekühlte erste Längsabschnitt 103 kann insbesondere so ausgeführt sein, dass in diesem Längsabschnitt ein Kühlmittel nicht in den Wärmetauscher eindringt bzw. dass der Wärmetauscher in diesem Längsabschnitt 103 keine Kühlmittelkanäle aufweist, durch die ein Kühlmittel fließen kann.

Fig. 3 zeigt eine schematische Darstellung eines Rippenplattenwärmetauschers 105 für eine Kühlvorrichtung 100 gemäß einem Ausführungsbeispiel. Der Rippenplattenwärmetauscher 105 weist mehrere Schichten auf, welche abwechselnd als Platte bzw. als Rippen ausgeführt sind. Zwischen benachbarten Platten 107 sind jeweils Rippen 109A, 109B angeordnet. Die Rippen 109A, 109B bilden jeweils Kanäle, durch welche die Zapfluft 106 bzw. das Kühlmedium 108 entlang der Oberfläche der jeweiligen Rippe fließen kann.

Der Rippenplattenwärmetauscher in Fig. 3 ist als Kreuzstromwärmetauscher ausgeführt. Dies bedeutet, dass die Fließrichtungen der Zapfluft 106 und des Kühlmediums 108 schräg zueinander verlaufen, d. h. sich überkreuzen. In dem Beispiel der Fig. 3 verlaufen diese beiden Fließrichtungen im Wesentlichen senkrecht zueinander.

Zueinander benachbarte Zwischenräume, welche von den Platten gebildet werden, sind für die Zapfluft 106 bzw. für das Kühlmedium 108 abwechselnd geöffnet bzw. verschlossen. So kann beispielsweise keine Zapfluft in den Zwischenraum zwischen die Platten 107A, 107B eindringen, wo hingegen in den benachbarten Zwischenraum zwischen den Platten 107B, 107C Zapfluft eindringen kann. Beim Kühlmedium 108 ist dies umgekehrt, so dass sich das Kühlmedium und die Zapfluft nicht miteinander vermischen können.

Die Oberfläche der Rippen und Platten, entlang derer Zapfluft strömen kann, wird als erste Oberfläche 111 bezeichnet, wohingegen die Oberfläche der Rippen und Platten, welche mit dem Kühlmedium in Berührung kommt, als zweite Oberfläche 113 bezeichnet wird.

### Bezugszeichenliste

- 10: Luftfahrzeug
- 100: Kühlvorrichtung
- 101: Fließrichtung der Zapfluft
- 103: erster Längsabschnitt
- 104: zweiter Längsabschnitt
- 105: Wärmetauscher
- 106: Zapfluft
- 107: Platten
- 108: Kühlmedium/Außenluft
- 109: Rippen
- 110: Einlassöffnung
- 111: erste Oberfläche
- 113: zweite Oberfläche
- 120: Auslassöffnung
- 210: Triebwerk
- 220: Tragfläche
- 230: Kopplungselement
- 240: Zapfstelle
- 250: Gasleitelement

## Patentansprüche

1. Kühlvorrichtung (100) zum Kühlen von Zapfluft (106) in einem Luftfahrzeug, aufweisend:
eine Einlassöffnung (110) zum Einlassen von Zapfluft und eine Auslassöffnung (120) zum Auslassen von Zapfluft;
einen Wärmetauscher (105) mit einer ersten Oberfläche (111), entlang derer die Zapfluft (106) von der Einlassöffnung zu der Auslassöffnung führbar ist und mit einer zweiten Oberfläche (113), entlang derer ein Kühlmedium (108) führbar ist;
wobei die erste Oberfläche (111) ein katalytisches Element aufweist und ausgeführt ist, einen katalytischen Abbau von Zapfluftverunreinigungen vorzunehmen;
wobei der Wärmetauscher (105) ein Rippenplattenwärmetauscher ist und die erste Oberfläche (111) zumindest teilweise von einer ersten Rippe (109B) gebildet wird.

2. Kühlvorrichtung (100) nach Anspruch 1,
wobei die erste Oberfläche (111) eine katalytische Beschichtung aufweist, welche die erste Oberfläche (111) zumindest teilweise beschichtet.

3. Kühlvorrichtung (100) nach Anspruch 1 oder 2,
wobei die erste Oberfläche (111) eine katalytische Beschichtung aufweist, welche die erste Oberfläche (111) vollständig beschichtet.

4. Kühlvorrichtung (100) nach einem der vorhergehenden Ansprüche,
wobei die erste Oberfläche (111) sich zumindest teilweise in einen ungekühlten Abschnitt (103) der Kühlvorrichtung (100) erstreckt.

5. Kühlvorrichtung (100) nach Anspruch 4,
wobei der ungekühlte Abschnitt (103) der Kühlvorrichtung (100) so angeordnet ist, dass sich der ungekühlte Abschnitt (103) in einer Fließrichtung (101) der Zapfluft an die Einlassöffnung (110) der Kühlvorrichtung anschließt.

6. Kühlvorrichtung (100) nach einem der Ansprüche 4 oder 5,
wobei ein gekühlter Abschnitt (104) zwischen dem ungekühlten Abschnitt (103) und der Auslassöffnung (120) der Kühlvorrichtung angeordnet ist.

7. Luftfahrzeug (10) mit einer Kühlvorrichtung (100) nach einem der Ansprüche 1 bis 6,
wobei die Einlassöffnung (110) der Kühlvorrichtung (100) mit einer Zapfstelle (240) gekoppelt ist, um Zapfluft aufzunehmen.

8. Luftfahrzeug (10) nach Anspruch 7,
wobei die Zapfstelle (240) ein Kompressor ist, welcher an einem Triebwerk (210) des Luftfahrzeugs (10) angeordnet ist.

9. Luftfahrzeug (10) nach Anspruch 7 oder 8,
wobei die Kühlvorrichtung (100) zwischen einem Triebwerk (210) und einer Tragfläche (220) angeordnet ist.
